# EUROPEAN PATENT APPLICATION

(11) **EP 2 902 339 A1**
(43) Date of publication of application: **05.08.2015**
(21) Application number: 15153369.2
(22) Date of filing: 24.10.2005
(51) Int. Cl.: B65D 81/00, B65D 85/804, A47J 31/06

(54) **Pod for preparing a beverage**

(30) Priority: 22.10.2004 GB 0423556
(62) Divisional of application: 05797695.3
(71) Applicant: Kraft Foods R & D, Inc., Deerfield, IL 60015 (US)
(72) Inventor: MacMahon, John, Banbury, Oxon OX16 2QU (GB); Norton, Mark, Banbury, Oxon OX16 2QU (GB); Fennel, Adam, Banbury, Oxon OX16 2QU (GB); Panesar, Satwinder, Banbury, Oxon OX16 2QU (GB); Zeller, Bary, Glenview, IL 60025 (US); Bodett, Susan, Glenview, IL 60025 (US); Gaonkar, Anilkumar, Buffalo Grove, IL 80089 (US); Rowan, Lee, Glenview, IL 60025 (US); Hudson, Heather, Glenview, IL 60025 (US)
(74) Representative: Boult Wade Tennant

(57) **Abstract**

The present invention provides a pod for preparing a beverage comprising:
a lower compartment defining a storage volume containing a water-soluble composition or a combination or mixture of water-soluble compositions for forming a beverage;
the lower compartment comprising an upper surface containing one or more apertures forming an inlet of the lower compartment and a lower surface formed at least partially from filtering material, the filtering material forming an outlet of the pod;
the pod further comprising an open-topped upper compartment above the lower compartment which defines a chamber suitable for receiving one or more flexible pads containing one or more beverage ingredients;
wherein an outlet of the chamber of the upper compartment communicates with the inlet of the lower compartment,
wherein the apertures of the inlet of the lower compartment are arranged for showering and or jetting in use water into the lower compartment.

## Description

The present invention relates to improvements in pods for preparing beverages which contain a water soluble substance. The water soluble substance may be a powdered ingredient for making a beverage such as coffee, tea or soup, fruit juice and desserts. The invention finds particular advantage where the water soluble substance is a milk powder, creamer powder, or chocolate or cappuccino powder ingredient. The pods are also known as pads, cartridges, capsules, pouches and bags.

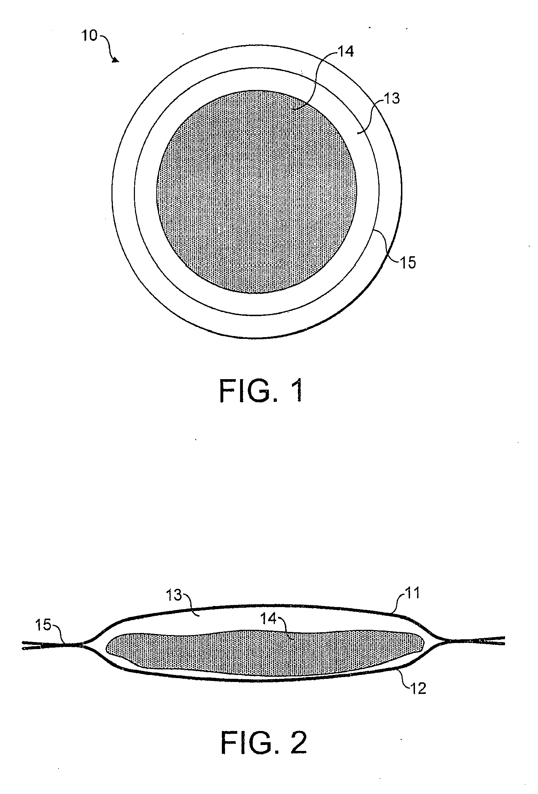

It is known to provide pods, in particular flexible pads, for use with beverage preparation machines which contain a water soluble substance such as a creamer powder. An example of a known pad is shown in Figures 1 and 2. The pad 10 is simple in construction and comprises a circular upper sheet 11 and a circular lower sheet 12 of filter material which are bonded together around a peripheral seam 15 to define and seal a storage volume 13 in which the water soluble substance 14 is contained. In use, the pad 10 is placed in a beverage preparation machine such as a coffee brewer and heated water is passed through the pad 10. The heated water flows through the upper sheet 11 and lower sheet 12 of filter material and in so doing contacts and dissolves the water soluble substance 14 contained in the storage volume 13 to form the beverage. The beverage then passes through the lower sheet 12 of the filter material and is dispensed into a suitable receptacle. The water soluble substance may be used to form the whole or part of a beverage. Where the water soluble substance is a milk powder or creamer powder, the pad may be used to form a milk-based beverage or to form a milk-based portion of an alternative beverage such as coffee.

Pads with creamer powders or milk based products may be used in dispensing cappuccino-style beverages. Such pads may be used in the beverage preparation machine on their own to dispense a milky, creamy or frothy beverage portion onto an already dispensed beverage, such as coffee. Alternatively, the pad containing the creamer powder or milk-based substance may be used in the beverage preparation machine in combination with a pad containing a substance for producing another beverage portion as taught in EP0756844. For example, two pads may be used at the same time in the machine, one pad containing a creamer powder and one pad containing roast and ground coffee. In this way, a complete beverage may be dispensed in one operation cycle of the beverage preparation machine.

The pads described above are similar to well known tea bags which are used for infusing hot water with tea leaves. However, there are a number of particular problems in using such flexible pads in beverage preparation machines where the pads contain a water soluble product such as a milk powder or creamer powder as opposed to a product which is infused in water but is not itself dissolved, such as roast and ground coffee or tea leaves. One disadvantage is that as the water soluble substance 14 is dissolved by the water passing through the pad, the pad tends to collapse in on itself bringing the upper sheet 11 and lower sheet 12 of filter material into contact with one another. In addition, because the dissolution of the water soluble substance 14 is not necessarily uniform throughout the storage volume of the pad 10 during use this can lead to portions of the filter material collapsing before the whole or a substantially part of the water soluble substance 14 has been dissolved. Where the upper sheet 11 and the lower sheet 12 of filter material contact one another, there is formed a low resistance flow path for the heated water. As a result, as soon as the pad 10 starts to collapse, the heated water has a tendency to flow through the portions of the pad 10 where the upper sheet 11 and lower sheet 12 are in contact rather than flowing more uniformly through the entire storage volume of the pad 10. This problem is exacerbated where the pad is used in a beverage preparation machine together with another pad containing another beverage portion as described above. It is preferred in such one-step dispensing of a beverage that the pad containing the infusible substance, such as roast and ground coffee, is placed on top of the pad containing the water soluble product so as to ensure proper extraction of the infusible substance as taught in EP0756844. However, the additional weight of the pad containing the infusible substance increases the likelihood that the pad containing the water soluble substance will collapse during the dispense cycle. For these reasons, use of pads such as those shown in Figures 1 and 2 can lead to substantial portions of the water soluble substance 14 being left within the pad 10 after the beverage preparation machine has completed its dispense cycle. Experiments show that for commonly used creamer powders as much as 40 to 60% of the creamer powder remains in the pad at the end of the dispense cycle. (The actual amount left depends to some extent on the dissolution properties of the creamer powder. Typically, the rate of flow of water is such that the beverage is prepared in under one minute. It is known with some compositions to include filler agents such as lactose. This results in poorer dissolution of the composition and an increased amount remaining in the pad after use. In contrast, the dissolution properties can be improved by use of agents such as surfactants. However, use of such agents has been found to result in only limited reduction in the amount of the substance left in the pad after use). This disadvantage can lead to a beverage or beverage portion being dispensed which is weaker than intended and also leads to wastage of the water soluble substance 14. Weak beverages can also be dispended where the ingredients or part of the ingredients are by-passed by part of the water flow during dispensation.

Attempts have been made to overcome this problem by providing a form-retaining stiffening body within the interior of the storage volume 13. EP1398279 discloses use of a form-providing stiffening body comprising a grid structure that itself comprises a compartmenting wall configuration that spans between the upper and lower sheets of the flexible pad. Whilst the form-providing stiffening body prevents collapse of the pad and contact of the upper sheet and lower sheet of filter material, the structure described is complex and increases the cost and complexity of manufacture compared to the simpler pad as shown in Figures 1 and 2. In addition, the compartmenting wall configuration of the pad necessitates more careful filling of the storage volume with the water-soluble substance to ensure consistent filling of the compartments.

Another disadvantage with the simple flexible pads of Figures 1 and 2 and the pad of EP1398279 is that, after use, the pad is left in a very wet state which is unpleasant for a user to handle when removing the pad manually from the beverage preparation machine. This can lead to dripping and soiling of the machine and surroundings as the pad is transported to a waste receptacle.

A further disadvantage of the known pads and the pads of EP1390279 is that, because substantial quantities of the water soluble substance can typically be left within the pad even at the end of a dispense cycle, the pad-holding section of the beverage preparation machine is left in a soiled state which is contaminated with beverage. As a result, the machine must be cleaned before a next beverage can be hygienically dispensed. The cleaning either involves manually disassembling the beverage preparation machine and washing the parts or by running another dispense cycle with no pad within the pad holding section so as to flush the beverage preparation machine. Both of these methods involves extra time and inconvenience to the user.

It is an object of the present invention to provide a pod which helps to alleviate these disadvantages and in particular to provide a pod which allows for a one step dispensation of a beverage containing, preferably, a brewed beverage ingredient and a soluble beverage composition.

Accordingly, the present invention provides a pod for preparing a beverage comprising:
a lower compartment defining a storage volume containing a water-soluble composition or a combination or mixture of water-soluble compositions for forming a beverage;
the lower compartment comprising an upper surface containing one or more apertures forming an inlet of the lower compartment and a lower surface formed at least partially from filtering material, the filtering material forming an outlet of the pod;
the pod further comprising an open-topped upper compartment above the lower compartment which defines a chamber suitable for receiving one or more flexible pads containing one or more beverage ingredients;
wherein an outlet of the chamber of the upper compartment communicates with the inlet of the lower compartment, wherein the apertures of the inlet of the lower compartment are arranged for showering and or jetting in use water into the lower compartment.

The upper surface of the lower compartment may form the lower surface of the upper compartment.

The inlet apertures of the lower compartment may also form outlet apertures of the upper compartment.

The filtering material may be bonded to a flange, located at or around an upper edge of the upper compartment, a side wall of the upper compartment, or the upper surface of the lower compartment. The filtering material may be bonded by any of the techniques known in the art, including, but not limited to, heat sealing, induction sealing, ultrasonic sealing or adhesion.

The whole of the lower surface may be formed from filtering material.

A portion of the lower surface may be non-transmissive to water and another portion is formed from the filtering material. The portion of filtering material may be located at or near a centre of the lower surface. Alternatively, the portion of filtering material may be an annulus located at a defined radius from the centre of the pod. Alternatively, the portion of filtering material may be at a periphery of the lower surface.

The upper surface of the lower compartment may be concave, convex, or plane in relation to the upper or lower compartment.

The upper surface of the lower compartment may be flexible. Alternatively, the upper surface of the lower compartment may be rigid or semi-rigid. An advantage of this alternative is that the rigid or semi-rigid upper surface of the lower compartment provides the pod as a whole with sufficient rigidity to make it easier to handle after use. In particular, the rigid or semi-rigid nature of the pod ensures that the spatial relationship of the inlet apertures is substantially maintained during use of the pod whilst the optional semi-flexible nature of the pod as a whole allows the pod to at least partially mould itself to the shape of a pod holder of a beverage preparation machine resulting in an improved fit and less chance of water by-pass in use.

The pod may further comprise one or more layers of filtering material adjacent the upper surface of the lower compartment. The one or more layers of filtering material may be in the lower compartment adjacent the inlet of the lower compartment. The one or more layers of filtering material may be in the upper compartment adjacent the outlet of the upper compartment.

The inlet apertures of the upper surface of the lower compartment may themselves be sized to act as a filtering means with or without the need for a separate filtering material.

The inlet apertures may be associated with a support means for maintaining a spatial arrangement of the inlet apertures. The support means may comprise a mesh, grid or similar structure. The support means may comprise localised reinforcing of the upper surface of the lower compartment.

The upper surface of the lower compartment may be formed from a filtering material and the localised reinforcing is in the form of rigid or semi-rigid elements associated with or surrounding at least some of the inlet apertures.

The lower compartment may comprise a rigid or semi-rigid sidewall.

The rigid or semi-rigid sidewall may maintain a physical separation of the filtering material and the upper surface of the lower compartment.

The inlet of the lower compartment may be located at or near a centre of the upper surface of the lower compartment.

The inlet of the lower compartment may be located at or near a periphery of the upper surface of the lower compartment.

The apertures of the inlet may be located in at least two discrete regions of the upper surface of the lower compartment.

A portion of the apertures of the inlet may be located at or near a centre of the upper surface of the lower compartment and a portion of the apertures of the inlet are located in a random or uniform arrangement across the upper surface of the lower compartment.

The apertures of the inlet may be arranged in concentric circles.

The inlet of the lower compartment may be flush with the upper surface of the lower compartment.

The upper surface of the lower compartment may comprise one or more cylindrical or frusto-conical recesses and the inlet is formed at or near a base of said recesses.

The frusto-conical recesses may be oriented at an angle of at least 7 degrees to the vertical. Whilst it is not intended to be bound by theory, it is believed that, having recesses which widen downwards at an angle of at least 7 degrees to the vertical, and owing to surface tension and increased welting, the water film is maintained and substantially prevented from disintegrating into droplets. The inlet of the lower compartment may comprise 1 to 100 apertures or 1 to 63 apertures or 5 to 30 apertures or 10 to 20 apertures.

At least some of the apertures may be directed downwards at 90 degrees to the horizontal of, or perpendicular to, the upper surface of the lower compartment.

The apertures may have an equivalent diameter of 0.1 mm to 5.0 mm or an equivalent diameter of 0.3 mm to 0.7 mm.

The height of the lower compartment from the upper surface to the lower surface may be between 2 mm and 50 mm.

The height of the lower compartment may be 5 mm to 7 mm.

The height of the lower compartment may be 11 mm to 14 mm or 20 to 50 mm.

The height of the upper compartment may be 25 to 30 mm.

Preferably, the height of the lower compartment is 5 mm to 7 mm when dispensing a beverage or beverage portion of 100 to 150 ml and 14 to 16 mm when dispensing a beverage or beverage portion of greater than 180 ml and greater than 20 mm when dispensing a beverage of greater than 240 ml. Different height lower compartments can be used to accommodate different volumes of water soluble composition as dictated by the needs for the type of beverage dispensed. For example the desired strength of the beverage and the strength of the beverage ingredients will also affect the required height of the lower compartment.

The height of the upper compartment may be 20 to 50 mm. Preferably, the height of the upper compartment is 25 to 30 mm.

The volume of the upper compartment may be from 5 cm³ to 35 cm³ and, preferably, from 10 cm³ to 25 cm³.

The volume of the lower compartment may be from 5 cm³ to 90 cm³ and, preferably, from 10 cm³ to 25 cm³.

The storage volume may further contain a dispersion plate associated with the outlet for creating a non-vertical flow or circulating flow of water, in use, within the storage volume.

The dispersion plate may be freely suspended within the storage volume.

The dispersion plate may be attached to the filtering material of the outlet.

The dispersion plate may form part of the lower surface.

The dispersion plate may be attached to a part of the upper surface of the lower compartment.

The dispersion plate may be planar.

The dispersion plate may be rippled, ridged or otherwise convoluted.

The dispersion plate may be non-apertured.

The dispersion plate may comprise one or more apertures.

The dispersion plate may be sealed or bonded to the lower surface and the one or more apertures are formed at the boundary between the dispersion plate and the outlet filtering means.

The dispersion plate may comprise a portion of the outlet filtering means which has modified material characteristics and is non-transmissive to water.

The outlet filtering means may comprise a filter material and the dispersion plate comprises a portion of the filter material which is hot stamped to render it impermeable to water.

The pod may comprise more than one dispersion plate.

The pod may be circular with a diameter of between 30 and 110 mm.

The storage volume may further contain one or more absorbent elements or particles or foamed plastic elements or particles.

The absorbent elements or particles may be spongiform.

The absorbent elements or particles may be an hydrogel, a starch, a spongiform material or a combination or mixture thereof. The spongiform elements or particles may be any suitable material which possesses the porous and water-retaining characteristics of a sponge. For example, compressed sponge or natural sponge. Dried seaweed can form a suitable alternative material.

Before exposure to liquid, the one or more absorbent elements or particles or foamed plastic elements or particles may be compressed.

In use, the one or more spongiform elements may act as an absorbent means for retaining excess moisture.

The pod may contain a single spongiform or hydrogel element or foamed plastic element.

The one or more absorbent elements or particles may interact with water in use such as to absorb water only during a portion of a dispense cycle.

The one or more absorbent elements or particles may interact with water at a predetermined temperature, pH or a start of a specified chemical reaction.

The one or more absorbent elements or particles may comprise a soluble coating which, in use, is dissolvable in water to allow absorption of water to take place.

The soluble coating may comprise sugar or gelatine.

The water-soluble composition may be agglomerated.

The agglomerated water-soluble composition may be produced by contacting the water-soluble composition with steam, water, or aqueous solution or dispersion to effect agglomeration, and optionally, either simultaneously or subsequently drying the agglomerated composition.

For the purposes of the present invention, water-soluble substances or compositions are defined as substances which wholly or substantially dissolve in the presence of a solvent which will typically be water. The ingredient composition of the substance before and after dissolution is substantially the same (excluding the diluting effect of the solvent). Thus, water-soluble substances exclude infusible substances such as roast and ground coffee and leaf tea. With infusible substances the ingredient composition of the infusion is substantially different to the ingredient composition of the infusible or extractable precursor since the infusion only contains certain flavour and / or aromatic qualities of the infusible substance. Examples of water-soluble substances according to the present invention include compositions such as milk powder, creamer powder, instant whitener, instant coffee, instant tea, instant soup, instant chocolate drink, sugar, instant fruit juice and instant dessert powders.

The water-soluble composition may be a milk powder, creamer powder, or chocolate or cappuccino powder ingredient.

The milk powder or creamer powder may be a dairy or non-dairy spray-dried coffee creamer or coffee whitener.

A fat component of the milk powder or creamer powder may have a melting point of 10 to 40 degrees Celsius.

The creamer powder may comprise one or more of vegetable fat, milk proteins, emulsifiers, stabilisers, foaming agents, milk fat, soy proteins, modified starches, carriers, fillers, sweeteners, flavours, colours, nutrients, preservatives and flow agents.

The chocolate powder ingredient may comprise one or more of cocoa, chocolate, chocolate crumb, sucrose, milk powder, vegetable fat, milk proteins, whey proteins, emulsifiers, stabilisers, modified starches, carriers, fillers, sweeteners, flavours, colours, nutrients, preservatives and flow agents.

The cappuccino powder ingredient may comprise one or more of instant coffee, lactose, milk powder, vegetable fat, milk proteins, whey proteins, emulsifiers, stabilisers, modified starches, carriers, fillers, sweeteners, flavours, colours, nutrients, preservatives, flow agents and foaming agents..

The pod may further comprise one or more channels or grooves in an upper face of the upper surface of the lower compartment, said channels or grooves extending towards the inlet of the lower compartment.

The channels may have a depth of 0.1 to 2.0 mm, preferably from 0.4 to 1.0 mm.

The pod may further comprise a plurality of upstanding projections on an upper face of the upper surface of the lower compartment forming passages extending towards the inlet of the lower compartment.

The channels, grooves or passages may extend radially towards a central inlet. The channels or grooves or passages assist in flow of water to the inlet of the pod is use. This is particularly advantageous when the pod is used in a one step procedure where a flexible pad is placed on top of the pod. The grooves or channels or passages ensure that the water can pass through extractable material that may be placed above the pod, thus significantly improving extraction efficiency. Additionally, the grooves or channels or passages ensure that the water can pass into the inlet of the pod without becoming blocked by sagging or distortion of the filtering material of the flexible pad. Rather than channels or grooves, vertical struts, pyramid structures or similar may be used to raise the filtering material of a pad off the upper surface of the lower compartment.

The inlet may be overlaid with a bar or grid structure that prevents a pad placed on top of the inlet region from sagging into contact with the inlet apertures.

The pod may further comprise means at or near the outlet for foaming the beverage.

The means for foaming the beverage may be an aperture for forming a jet of beverage and subsequently impacting said jet of beverage against an impingement surface so as to produce foaming of the beverage or a sintered outlet nozzle, or zeolite bed,membrane, eductor or venturi ejector.

The pod may further comprise a gasket seal on or adjacent an upper edge of the upper compartment or the flange for sealing, in use, against a pod holder of a beverage preparation machine in which the pod is used.

The pod may further comprise a peripheral seal on an outer surface of the sidewall for sealing, in use, against a pod holder of a beverage preparation machine in which the pod is used.

The pod may further comprise a seal on or adjacent a lower edge of a sidewall for sealing, in use, against a pod holder of a beverage preparation machine in which the pod is used.

The lower and upper compartments may be separated by a partition which defines the upper surface of the lower compartment. The partition may be removeable. The partition may be sealingly engaged with a remainder of the pod by means of an O-ring.

Alternatively, the lower and upper compartments may be separated by a partition which is formed integrally with the upper and or lower compartments.

The apertures of the inlet may be apertures in the partition.

The partition may have grooves, channels or upstanding projections forming passages formed in its upper and or lower face. This arrangement can help maintain a clearance between the beverage contents in the lower compartment and the exit of the inlet apertures to prevent clogging of the apertures. Alternatively, the lower surface of the partition may be substantially smooth such that the apertures of the inlet exit the partition flush with the lower surface of the partition. With this arrangement the exit of the inlet apertures may lie in contact with the beverage contents of the lower compartment which can help to maximize the utilisation of space within the lower compartment.

The partition may be rigid or semi-rigid. Alternatively, the partition may be flexible.

The partition may be formed from a perforated material, such as a filtering material, preferably filter paper.

The storage volume may be a unitary volume.

The storage volume may comprise a plurality of compartments. The plurality of compartments may comprise different beverage ingredients.

One or more of the compartments may contain one or more absorbent elements or particles or foamed elements or particles.

The storage volume may comprise one or more baffles.

The pod may further comprise a cover for sealing the open-topped upper compartment.

The cover may comprise a push-fit lid, or a peelable or tearable laminate.

The cover may be formed at least partially from a filtering material and provides an inlet to the upper compartment. There may be a cover which comprises a push-fit lid, or a peelable or tearable laminate

The present invention also provides a beverage brewing kit comprising a pod, as described above, in combination with one or more loose beverage ingredients located in the chamber of the upper compartment and sealed therein by the filtering material, and/or the push-fit lid, or peelable or tearable laminate.

The loose beverage ingredients may comprise roast and ground coffee.

The kit may comprise a pod as described above in combination with one or more flexible filter pads containing one or more beverage ingredients suitable for brewing.

The one or more flexible pads may be located in the chamber of the upper compartment and sealed therein by the filtering material, and/or the push-fit lid, or peelable or tearable laminate.

The flexible filter pads may be receivable in the chamber of the upper compartment.

The one or more flexible filter pads may contain roast and ground coffee.

In use, brewing and filtering of the beverage may occur in an inverse manner, against the force of gravity.

The present invention further provides a method of dispensing a beverage using a pod as described above comprising the step of passing water downwardly through the pod such that beverage initially exits the pod through a lowermost surface thereof.

Water may be passed upwardly through the pod such that beverage initially exits the pod through an uppermost surface thereof.

The pod may be orientated in a non-horizontal orientation and water passed in a non-vertical direction through the pod.

Water may be passed through the pod at a temperature greater than 70 degrees Celsius.

Water may be passed through the pod as a discontinuous flow such as a pulsed flow.

As an alternative, in use, brewing and filtering of the beverage occurs in an inverse manner, against the force of gravity. This can be provided by inversing the pod, such that the inlet of the pod is now the lower most part of the pod and by passing water through the pod in an upwards direction against the force of gravity.

A beverage is prepared using the pods of the present invention by inserting the pods in a beverage preparation machine. The pods may be used in a variety of beverage preparation machines. In one example, the beverage preparation machine generally comprises a housing containing a water heater, a water pump, optionally an air compressor, a control processor, a user interface and a head. The head in turn generally comprises a holder for holding, in use, the pad or pod. The beverage preparation machine is also provided with a water tank.

The housing comprises a dispense station where dispensation of the beverage takes place. The dispense station comprises a receptacle stand having a hollow interior forming a drip tray.

The head is located towards the top of the housing above the receptacle stand. The holder of the head is shaped to receive the pod of the present invention and to hold the pod in the correct orientation such that water may be passed through the pod. Preferably the holder and head are provided with sealing means for sealing around a periphery of the pod to prevent by-pass flow of water in use. The head may be designed to direct flow of water downwardly through the pod so that beverage exits the pod through a lowermost surface of the pod. Alternatively, the head may be designed to direct flow of water upwardly through the pod so that beverage initially exits the pod through an uppermost surface of the pod before being ultimately directed downwardly to a receptacle. Of course the pod may be used in an orientation other than horizontal, for example, in a vertical orientation. The pod may also be inverted such that the surface described as a lower surface above is uppermost in the pod holder of the beverage preparation machine.

The user interface is located on the front of the housing and comprises a start/stop button, and a plurality of status indicators.

The start/stop button controls commencement of the operating cycle and is a manually operated push-button, switch or similar.

The water tank is located to the rear of the housing and is connected in use to a water tank station located at a rear half of the housing.

The water pump is operatively connected between the water tank and the water heater and is controlled by the control processor.

The water heater is located in the interior of the housing. The heater is able to heat water received from the water pump from a starting temperature of approximately 20 °C to an operating temperature of around 85 °C in under 1 minute.

The control processor of the beverage preparation machine comprises a processing module and a memory. The control processor is operatively connected to, and controls operation of, the water heater, water pump, air compressor and user interface.

Further aspects of the invention are set out in the following numbered clauses:
1. A pod for preparing a beverage comprising:
   a lower compartment defining a storage volume containing a water-soluble composition or a combination or mixture of water-soluble compositions for forming a beverage;
   the lower compartment comprising an upper surface containing one or more apertures forming an inlet of the lower compartment and a lower surface formed at least partially from filtering material, the filtering material forming an outlet of the pod;
   the pod further comprising an open-topped upper compartment above the lower compartment which defines a chamber suitable for receiving one or more flexible pads containing one or more beverage ingredients;
   wherein an outlet of the chamber of the upper compartment communicates with the inlet of the lower compartment,
   wherein the apertures of the inlet of the lower compartment are arranged for showering and or jetting in use water into the lower compartment.
2. A pod as in clause 1 wherein the upper surface of the lower compartment forms the lower surface of the upper compartment.
3. A pod as in clause 1 or clause 2 wherein inlet apertures of the lower compartment also form outlet apertures of the upper compartment.
4. A pod as in any preceding clause wherein the filtering material is bonded to a flange, located at or around an upper edge of the upper compartment, a side wall of the upper compartment, or the upper surface of the lower compartment.
5. A pod as in any preceding clause wherein the whole of the lower surface is formed from filtering material.
6. A pod as in any preceding clause wherein a portion of the lower surface is non-transmissive to water and another portion is formed from the filtering material.
7. A pod as in clause 6 wherein the portion of filtering material is located at or near a centre of the lower surface.
8. A pod as in clause 6 wherein the portion of filtering material is an annulus located at a defined radius from the centre of the pod.
9. A pod as in clause 6 wherein the portion of filtering material is at a periphery of the lower surface.
10. A pod as in any preceding clause wherein the upper surface of the lower compartment is concave, convex, or plane in relation to the upper or lower compartment.
11. A pod as in any preceding clause wherein the upper surface of the lower compartment is flexible.
12. A pod as in any of clauses 1 to 10 wherein the upper surface of the lower compartment is rigid or semi-rigid.
13. A pod as in any preceding clause wherein the pod further comprises one or more layers of filtering material adjacent the upper surface of the lower compartment.
14. A pod as in any preceding clause wherein the pod further comprises one or more layers of filtering material in the lower compartment adjacent the inlet of the lower compartment.
15. A pod as in any preceding clause wherein the pod further comprises one or more layers of filtering material in the upper compartment adjacent the outlet of the upper compartment.
16. A pod as in any preceding clause wherein the inlet apertures of the upper surface of the lower compartment act as a filtering means.
17. A pod as in any preceding clause wherein the inlet apertures are associated with a support means for maintaining a spatial arrangement of the inlet apertures.
18. A pod as in clause 17 wherein the support means comprises a mesh, grid or similar structure.
19. A pod as in clause 17 wherein the support means comprises localised reinforcing of the upper surface of the lower compartment.
20. A pod as in clause 19 wherein the upper surface of the lower compartment is formed from a filtering material and the localised reinforcing is in the form of rigid or semi-rigid elements associated with or surrounding at least some of the inlet apertures.
21. A pod as in any preceding clause wherein the lower compartment comprises a rigid or semi-rigid sidewall.
22. A pod as in clause 21 wherein the rigid or semi-rigid sidewall maintains a physical separation of the filtering material and the upper surface of the lower compartment.
23. A pod as in any preceding clause wherein the inlet of the lower compartment is located at or near a centre of the upper surface of the lower compartment.
24. A pod as in any of clauses 1 to 22 wherein the inlet of the lower compartment is located at or near a periphery of the upper surface of the lower compartment.
25. A pod as in any preceding clause wherein the apertures of the inlet are located in at least two discrete regions of the upper surface of the lower compartment.
26. A pod as in any preceding clause wherein a portion of the apertures of the inlet are located at or near a centre of the upper surface of the lower compartment and a portion of the apertures of the inlet are located in a random or uniform arrangement across the upper surface of the lower compartment.
27. A pod as in any preceding clause wherein the apertures of the inlet are arranged in concentric circles.
28. A pod as in any preceding clause wherein the inlet of the lower compartment is flush with the upper surface of the lower compartment.
29. A pod as in any of clauses 1 to 27 wherein the upper surface of the lower compartment comprises one or more cylindrical or frusto-conical recesses and the inlet is formed at or near a base of said recesses.
30. A pod as in clause 29 wherein sidewalls of the frusto-conical recesses are oriented at an angle of at least 7 degrees to the vertical.
31. A pod as in any preceding clause wherein the inlet of the lower compartment comprises 1 to 100 apertures.
32. A pod as in any of clauses 1 to 30 wherein the inlet of the lower compartment comprises 1 to 63 apertures.
33. A pod as in any of clauses 1 to 30 wherein the inlet of the lower compartment comprises 5 to 30 apertures.
34. A pod as in any of clauses 1 to 30 wherein the inlet of the lower compartment comprises 10 to 20 apertures.
35. A pod as in any preceding clause wherein at least some of the apertures are directed downwards at 90 degrees to the horizontal of, or perpendicular to, the upper surface of the lower compartment.
36. A pod as in any preceding clause wherein the apertures have an equivalent diameter of 0.1 mm to 5.0 mm.
37. A pod as in clause 36 wherein the apertures have an equivalent diameter of 0.3 mm to 0.7 mm.
38. A pod as in any preceding clause wherein the height of the lower compartment from the upper surface to the lower surface is between 2 mm and 50 mm.
39. A pod as in clause 38 wherein the height of the lower compartment is 5 mm to 7 mm.
40. A pod as in clause 38 wherein the height of the lower compartment is 11 mm to 14 mm.
41. A pod as in any preceding clause wherein the height of the upper compartment is 20 to 50 mm.
42. A pod as in clause 41 wherein the height of the upper compartment is 25 to 30 mm.
43. A pod as in any preceding clause wherein the volume of the upper compartment is from 5 cm³ to 35 cm³ and, preferably, from 10 cm³ to 25 cm³.
44. A pod as in any preceding clause wherein the volume of the lower compartment is from 5 cm³ to 90 cm³ and, preferably, from 10 cm³ to 25 cm³.
45. A pod as in any preceding clause wherein the storage volume further contains a dispersion plate associated with the outlet for creating a non-vertical flow or circulating flow of water, in use, within the storage volume.
46. A pod as in clause 45 wherein the dispersion plate is freely suspended within the storage volume.
47. A pod as in clause 45 wherein the dispersion plate is attached to the filtering material of the outlet.
48. A pod as in clause 45 wherein the dispersion plate forms part of the lower surface.
49. A pod as in any clause 45 wherein the dispersion plate is attached to a part of the upper surface of the lower compartment.
50. A pod as in any of clauses 45 to 49 wherein the dispersion plate is planar.
51. A pod as in any of clauses 45 to 49 wherein the dispersion plate is rippled, ridged or otherwise convoluted.
52. A pod as in any of clauses 45 to 51 wherein the dispersion plate is non-apertured.
53. A pod as in clauses 45 to 51 wherein the dispersion plate comprises one or more apertures.
54. A pod as in clause 53 wherein the dispersion plate is sealed or bonded to the lower surface and the one or more apertures are formed at the boundary between the dispersion plate and the outlet filtering means.
55. A pod or pad as in clause 45 wherein the dispersion plate comprises a portion of the outlet filtering means which has modified material characteristics and is non-transmissive to water.
56. A pod as in clause 45 wherein the outlet filtering means comprises a filter material and the dispersion plate comprises a portion of the filter material which is hot stamped to render it impermeable to water.
57. A pod as in any of clauses 45 to 56 comprising more than one dispersion plate.
58. A pod as in any preceding clause which is circular with a diameter of between 30 and 110 mm.
59. A pod as in any preceding clause wherein the storage volume further contains one or more absorbent elements or particles or foamed plastic elements or particles.
60. A pod as in clause 59 wherein the absorbent elements or particles are spongiform.
61. A pod as in clause 59 wherein the absorbent elements or particles are an hydrogel, a starch, a spongiform material or a combination or mixture thereof.
62. A pod as in any of clauses 59 to 61 wherein before exposure to liquid, the one or more absorbent elements or particles or foamed plastic elements or particles are compressed.
63. A pod as in any of clauses 59 to 62 wherein, in use, the one or more spongiform elements act as an absorbent means for retaining excess moisture.
64. A pod as in any of clauses 59 to 63 containing a single spongiform or hydrogel element or foamed plastic element.
65. A pod as in any of clauses 59 to 64 wherein the one or more absorbent elements or particles interact with water in use such as to absorb water only during a portion of a dispense cycle.
66. A pod as in any of clauses 59 to 65 wherein the one or more absorbent elements or particles interact with water at a predetermined temperature, pH or a start of a specified chemical reaction.
67. A pod as in any of clauses 59 to 66 wherein the one or more absorbent elements or particles comprise a soluble coating which, in use, is dissolvable in water to allow absorption of water to take place.
68. A pod as in clause 67 wherein the soluble coating comprises sugar or gelatine.
69. A pod as in any preceding clause wherein the water-soluble composition is agglomerated.
70. A pod as in clause 69 wherein the agglomerated water-soluble composition is produced by contacting the water-soluble composition with steam, water, or aqueous solution or dispersion to effect agglomeration, and optionally, either simultaneously or subsequently drying the agglomerated composition.
71. A pod as in any preceding clause wherein the water-soluble composition is a milk powder, creamer powder, or chocolate or cappuccino powder ingredient.
72. A pod as in clause 71 wherein the milk powder or creamer powder is a dairy or non-dairy spray-dried coffee creamer or coffee whitener.
73. A pod as in clause 72 wherein a fat component of the milk powder or creamer powder has a melting point of 10 to 40 degrees Celsius.
74. A pod as in clause 72 or clause 73 wherein the creamer powder comprises one or more of vegetable fat, milk proteins, emulsifiers, stabilisers, foaming agents, milk fat, soy proteins, modified starches, carriers, fillers, sweeteners, flavours, colours, nutrients, preservatives and flow agents.
75. A pod as in clause 71 wherein the chocolate powder ingredient comprises one or more of cocoa, chocolate, chocolate crumb, sucrose, milk powder, vegetable fat, milk proteins, whey proteins, emulsifiers, stabilisers, modified starches, carriers, fillers, sweeteners, flavours, colours, nutrients, preservatives and flow agents.
76. A pod as in clause 71 wherein the cappuccino powder ingredient comprises one or more of instant coffee, lactose, milk powder, vegetable fat, milk proteins, whey proteins, emulsifiers, stabilisers, modified starches, carriers, fillers, sweeteners, flavours, colours, nutrients, preservatives, flow agents and foaming agents..
77. A pod as in any preceding clause further comprising one or more channels or grooves in an upper face of the upper surface of the lower compartment, said channels or grooves extending towards the inlet of the lower compartment.
78. A pod as in clause 77 wherein the channels have a depth of 0.1 to 2.0 mm, preferably from 0.4 to 1.0 mm.
79. A pod as in any preceding clause further comprising a plurality of upstanding projections on an upper face of the upper surface of the lower compartment forming passages extending towards the inlet of the lower compartment.
80. A pod as in any of clauses 77 to 79 wherein the channels, grooves or passages extend radially towards a central inlet.
81. A pod as in any preceding clause further comprising means at or near the outlet for foaming the beverage.
82. A pod as in clause 81 wherein the means for foaming the beverage is an aperture for forming a jet of beverage and subsequently impacting said jet of beverage against an impingement surface so as to produce foaming of the beverage.
83. A pod as in clause 81 wherein the means for foaming the beverage comprises a sintered outlet nozzle, or zeolite bed, membrane, eductor or venturi ejector.
84. A pod as in any preceding clause further comprising a gasket seal on or adjacent an upper edge of the upper compartment or the flange for sealing, in use, against a pod holder of a beverage preparation machine in which the pod is used.
85. A pod as in any preceding clause further comprising a peripheral seal on an outer surface of the sidewall for sealing, in use, against a pod holder of a beverage preparation machine in which the pod is used.
86. A pod as in any preceding clause further comprising a seal on or adjacent a lower edge of a sidewall for sealing, in use, against a pod holder of a beverage preparation machine in which the pod is used.
87. A pod as in any preceding clause wherein the lower and upper compartments are separated by a partition which defines the upper surface of the lower compartment.
88. A pod as in clause 87 wherein the partition is removeable.
89. A pod as in clause 88 wherein the partition is sealingly engaged with a remainder of the pod by means of an O-ring.
90. A pod as in any of clause 87 wherein the lower and upper compartments are separated by the partition which is formed integrally with the upper and or lower compartments.
91. A pod as in any of clauses 87 to 90 wherein the apertures of the inlet are apertures in the partition.
92. A pod as in clause 91 wherein the partition has grooves, channels or upstanding projections forming passages formed in its upper and or lower face.
93. A pod as in clause 91 wherein the lower surface of the partition is substantially smooth such that the apertures of the inlet exit the partition flush with the lower surface of the partition.
94. A pod as in any of clauses 87 to 93 wherein the partition is rigid or semi-rigid.
95. A pod as in any of clauses 87 to 93 wherein the partition is flexible.
96. A pod as in any of clauses 87 to 95 wherein the partition is formed from a perforated material, such as a filtering material, preferably filter paper.
97. A pod as in any preceding clause wherein the storage volume is a unitary volume.
98. A pod as in any of clauses 1 to 96 wherein the storage volume comprises a plurality of compartments.
99. A pod as in clause 98 wherein the plurality of compartments comprises different beverage ingredients.
100. A pod as in any of clauses 97 to 99 wherein one or more of the compartments contain one or more absorbent elements or particles or foamed elements or particles.
101. A pod as in any preceding clause wherein the storage volume comprises one or more baffles.
102. A pod as in any preceding clause further comprising a cover for sealing the open-topped upper compartment.
103. A pod as in clause 102 wherein the cover comprises a push-fit lid, or a peelable or tearable laminate.
104. A pod as in clause 102 wherein the cover is formed at least partially from a filtering material and provides an inlet to the upper compartment.
105. A pod as in clause 104 further comprising a cover which comprises a push-fit lid, or a peelable or tearable laminate
106. A beverage brewing kit comprising a pod, as in any preceding clause, in combination with one or more loose beverage ingredients located in the chamber of the upper compartment and sealed therein by the filtering material, and/or the push-fit lid, or peelable or tearable laminate.
107. A beverage brewing kit as in clause 106 wherein the loose beverage ingredients comprise roast and ground coffee.
108. A beverage brewing kit comprising a pod as in any of clauses 1 to 106 in combination with one or more flexible filter pads containing one or more beverage ingredients suitable for brewing.
109. A beverage brewing kit as in clause 106 wherein one or more flexible pads are located in the chamber of the upper compartment and sealed therein by the filtering material, and/or the push-fit lid, or peelable or tearable laminate.
110. A beverage brewing kit as in clause 106 wherein the flexible filter pads are receivable in the chamber of the upper compartment.
111. A beverage brewing kit as in any of clauses 106 to 110 wherein the one or more flexible filter pads contain roast and ground coffee.
112. A beverage brewing kit as in any of clauses 106 to 111 wherein, in use, brewing and filtering of the beverage occurs in an inverse manner, against the force of gravity.
113. A method of dispensing a beverage using a pod as in any of clauses 1 to 106 comprising the step of passing water downwardly through the pod such that beverage initially exits the pod through a lowermost surface thereof.
114. A method of dispensing a beverage using a pod as in any of clauses 1 to 106 comprising the step of passing water upwardly through the pod such that beverage initially exits the pod through an uppermost surface thereof.
115. A method of dispensing a beverage using a flexible pad as in any of clauses 1 to 106 comprising the step of orientating the pod in a non-horizontal orientation and passing water in a non-vertical direction through the pod.
116. A method of dispensing a beverage using a pod as in any of clauses 1 to 106 comprising the step of passing water through the pod at a temperature greater than 70 degrees Celsius.
117. A method of dispensing a beverage using a pod as in any of clauses 1 to 106 comprising the step of passing water through the pod as a discontinuous flow.
118. A method of dispensing a beverage as in clauses 117 wherein the discontinuous flow of water is a pulsed flow.

Embodiments of the present invention will now be described, by way of example, with reference to the accompanying drawings in which:
Figure 1 is an upper plan view of a prior art flexible pad;
Figure 2 is a cross-sectional view of the flexible pad of Figure 1;
Figure 3 is a cross-sectional view of a pod according to the present invention;
Figure 4 is a cross-sectional view of another pod according to the present invention;
Figure 5 is an exploded perspective view of the pod of Figure 4;
Figures 6a to 6d show lower plan views of alternative embodiments of pod according to the present invention;
Figure 7 is a schematic cross-sectional view of another pod according to the present invention;
Figure 8 is a schematic perspective view of a portion of another pod according to the present invention; and
Figure 9 is a schematic cross-sectional view of another pod according to the present invention.

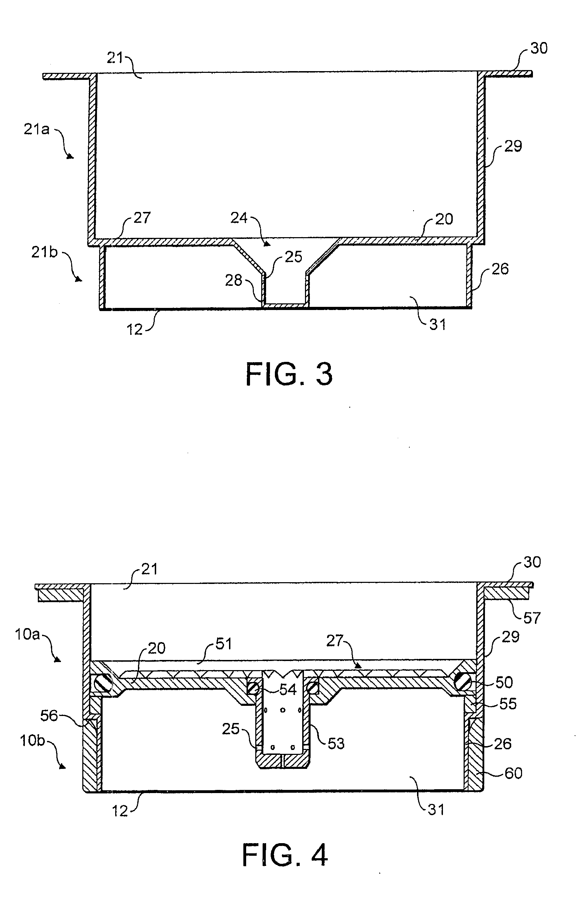

Figure 3 illustrates a pod 10 according to the present invention. The pod 10 comprises an upper compartment 10a and a lower compartment 10b. A flexible, rigid or semi-rigid partition 20 is formed between the compartments 10a and 10b. The partition 20 has a planar upper surface 27 with a centrally located recess 24. The recess 24 is provided with six apertures 25.

The partition forms a lower boundary of the upper compartment 10a and an upper boundary of the lower compartment 10b.

A layer of filtering material 12 is bonded by heat or adhesive to a lower edge of the partition 20, so as to form a lower surface of the lower compartment.

A lower end of the tubular extension 28 forming the recess 24 of the partition extends into contact with the filtering material 12 and helps to maintain the separation between the filtering material 12 and the partition 20.

A tubular cup 29 of the upper compartment 10b extends upwardly from the partition 20. The cup 29 is open topped and comprises an outwardly directed flange 30 at its distal end. A gasket seal 57 may be provided on an underside of the flange 30 of the cup 29. The seal 57 engages in use a pod holder of a beverage preparation machine to prevent water by-pass. The cup 29 defines a chamber 21 in which, in use, flexible pads may be received as described below.

As shown in Figure 3, a storage volume 31 is defined in the lower compartment 10b by the partition 20 and the layer of the filtering material 12. The storage volume 31 contains a volume of a water soluble composition. The invention finds particular application where the water soluble substance is a milk powder, creamer powder, or chocolate or cappuccino powder ingredient. Milk powders include dried skimmed milk, part-skimmed milk, and whole milk, dried milk protein concentrates, isolates, and fractions, or any combination thereof. Creamer powders can be manufactured from dairy and/or non-dairy food ingredients and typically contain emulsified fat, stabilized by protein or modified starch, dispersed in a carrier that facilitates drying, especially spray drying. Optional ingredients include buffers, flavours, colours, fillers, sweeteners, foaming agents, flow agents, nutrients, preservatives, and the like. Milk powders and creamer powders are particularly useful as coffee whiteners for brewed, soluble, and flavoured coffee products, including latte and cappuccino. In the following description, for example only, the water soluble substance will be described as a creamer powder unless the context otherwise requires.

The creamer powder may for example comprise the following by weight:

| | |
|---|---|
| Hardened vegetable fat | 49% |
| Glucose syrup | 41% |
| Sodium Caseinate | 4.5% |
| Polyphosphates - K2HPO4 | 2.0% |
| Na-Polyphosphate | 2.5% |
| Silicon dioxide | 0.25% |
| Emulsifier (Sodium stearoyl-2-lactylate) | 0.75% |

Other compositions may be used which contain fillers such as lactose and additional stabilisers. Additional emulsifiers may be added to improve wetting. Advantageously, the creamer may be provided in an agglomerated form to assist and improve solubility. Advantageously, the creamer powder may comprise a low melting temperature fat having a melting temperature of between 10 and 40 degrees Celsius. Some or all of the fat content of the composition noted above may be substituted for low melting temperature fat. In one example the composition comprises 24% low melting temperature fat and 25% fat with a melting temperature of above 40 degrees Celsius. This results in a reduction of creamer powder residue in the pod of around 15 to 20%.

The storage volume 31 may also be provided with a dispersion plate (not shown) which is freely moveable within the storage volume.

The partition 20, cup 29 and dispersion plate are all formed from a rigid or semi-rigid material such as polypropylene, polyester, polystyrene, nylon, other engineering plastics, composites, metal, metal-plastic composites, card, wood, rubber or biodegradable plastics such as degradable polyethylene (for example, SPITEK supplied by Symphony Environmental, Borehamwood, United Kingdom), biodegradable polyester amide (for example, BAK 1095 supplied by Symphony Environmental), poly lactic acids (PLA supplied by Cargil, Minnesota, USA), starch-based polymers, cellulose derivatives and polypeptides. The material may be thermoformed, compression moulded or injection moulded.

In use, one or more flexible pads of the type shown in Figures 1 and 2 are placed in the chamber of the cup 29. The pod 10 is then placed in a suitable beverage preparation machine and water is passed through the pod 10. The water enters the cup 29 through the open top and passes through the one or more flexible pads thereby producing a first beverage portion. The beverage portion then passes into the storage volume 31 of the lower compartment through the inlet apertures 25 at the base of the recess 24. The liquid circulates within the unitary storage volume 31 of the lower compartment 10b dissolving the creamer powder to form the final beverage which contains the brewed element and the soluble ingredient element. The beverage is then able to pass through the layer of filtering material 12 and out of the beverage preparation machine. In this way, for example, a milky or frothy coffee can be dispensed in a single step.

In an alternative, the pod may be used inverted. The order in which water passes through the pod is identical to the manner of use mentioned above. However, the beverage preparation machine is arranged to pass water through the pod using reverse filtration, i.e. filtration against the force of gravity, so that the inlet of the pod (the cup 29) is positioned at the bottom of the pod (by inversion of the pod) and filtration then occurs in an upwards direction-against the force of gravity.

After use, the user of the beverage preparation machine may remove the pod 10 and dispose of it in a waste receptacle. Advantageously, the rigidity of the pod 10 imparted by the rigid or semi-rigid structure makes for easier handling of the pod 10 compared to the prior art pad of Figures 1 and 2.

With the pod 10 of Figure 3 the amount of creamer residue remaining within the storage volume 31 was reduced to around 10%.

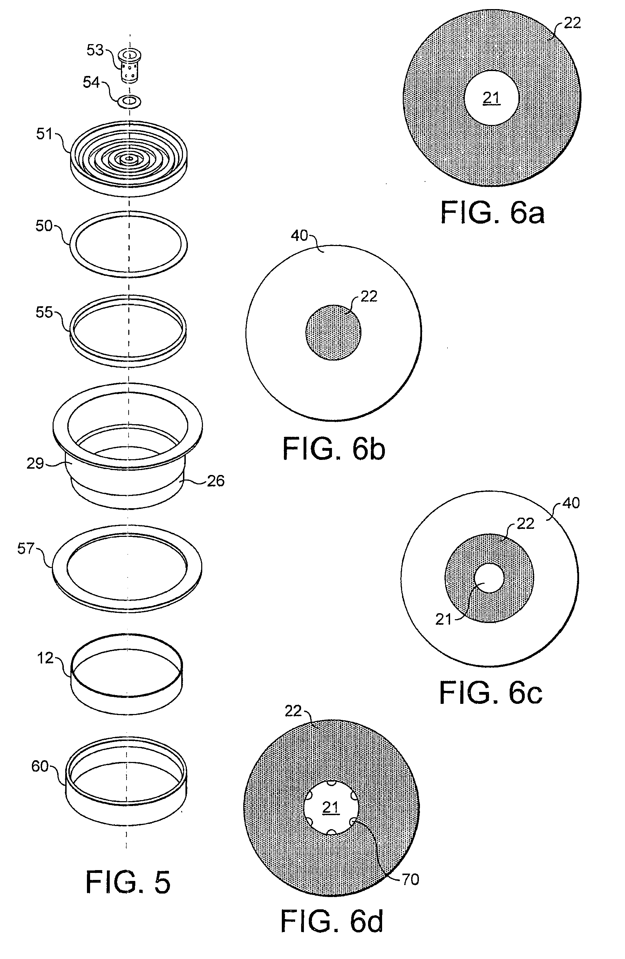

Figures 4 and 5 illustrate another embodiment which is particularly suitable for use as a re-useable pod which can be refilled with powdered composition. Like components have been referenced by like numerals. This embodiment differs in that the partition 20 is a separate component which is slidingly engageable with the inside of the cup 29. Sealing between the cup 29 and the partition is achieved by use of an O-ring 50. The axial location of the partition 20 within the cup 29 is determined by a spacer ring 55 which is interposed between the partition 20 and an inwardly directed shoulder 56 of the pod 10. When located in the cup 29, the partition 20 defines the lower compartment 10b and the upper chamber 10a respectively below and above the partition 20. Altering the position of the partition can be used for increasing or decreasing the volume of the storage volume 31 of the lower compartment 10b.

A plate in the form of a grid 51 is located on an upper side of the partition 20 and is received in a recess in the upper surface 27 of the partition 20. The grid 51 comprises numerous apertures. The grid 51 ensures that the material of a flexible pad placed thereupon cannot sag into and block the inlet apertures 25.

An aperture 52 is formed in the centre of the partition 20. An inlet insert 53 is sealingly engageable in the aperture 52 by means of an O-ring 54. The inlet insert 53 comprises the plurality of inlet apertures 25 which may be sized and directed as described above.

The pod 10 may comprise a gasket seal 57 on an underside of an outwardly directed flange 30 as described above.

In this embodiment the filter material 12 is held by means of a sealing ring 60 which frictionally engages the sidewall of the cup 29, with the filter material 12 sandwiched inbetween. Alternatively, the filter material may be bonded to the flange (not shown).

In use, the pod operates in the same way as the previous embodiment except that water flow passes through from the flexible pad through the grid 51 and flows through the inlet apertures 25 into the storage volume 31. This pod may also be used inverted.

In a non-illustrated embodiment, the storage volume 31 also contains a spongiform element in the form of a circular disc of compressed sponge material. The disc has preferred diameters of 100 to 100 mm, 50 to 59 mm and 30 to 40 mm and a thickness of 3 mm. The disc is formed from cellulose sponge such as that manufactured by 3M. Other suitable materials for the spongiform element include other food grade materials with similar physical properties to those of cellulose sponge in terms of there porosity and or expandability.

Prior to use of the pod, the pod and its contents are dry. If necessary, the pod can be supplied in an hermetically sealed package to prevent moisture ingress or absorption.

The compressed sponge disc may be positioned on top of the creamer powder within the storage chamber 31. Alternatively, the compressed sponge may be positioned underneath the creamer powder or within the mass of the creamer powder.

In use, the pod is used as described above. On contact with the water, the compressed sponge rapidly expands. In the expanded state the disc has a thickness of between 10 and 20 mm, preferably around 15 mm. Thus, the action of the liquid on the compressed sponge is to produce an expansion in the thickness of the compressed sponge of around 500%. The compressed sponge may be configured to expand generally only in one dimension, i.e. its thickness, or may be configured to expand three-dimensionally, i.e. to increase its thickness and also its diameter. Water is able to pass through the expanded compressed sponge substantially unhindered. As a result, the water quickly contacts and dissolves the creamer powder to produce the milk based beverage or beverage portion. The beverage containing the dissolved creamer powder passes through the lower filter layer 12 and out of the beverage preparation machine.

Advantageously, the porous water-retaining nature of the spongiform element helps to retain excess moisture that may be within the pod. The capillary action of the pores of the spongiform element help to prevent dripping from the pod as it is transferred to a waste receptacle. In addition, the water-retaining nature of the spongiform element has the consequence that the pod holding section of the beverage preparation machine contains less moisture and hence less contamination than compared with the use of prior art pads. As a result the machine is easier to clean and prepare in readiness for the next dispense cycle. In the above the pod has been described as containing spherical spongiform particles. However, the particles may take other forms such as block shapes, irregular shapes or be formed as shredded portions of a sheet material.

In an alternative, non-illustrated embodiment, the storage volume 31 also contains a plurality of absorbent particles in the form of particles of compressed sponge material. The particles 20 each a size (diameter or length) of 1 to 10 mm and a thickness of 1 to 3 mm before use. The particles 20 are formed from compressed cellulose sponge. Preferably the ratio by weight of the creamer powder to the absorbent particles before use is from 20:1 to 2:1, preferably around 3:1.

The compressed particles are dispersed throughout the creamer powder within the storage chamber.

In use, the pod is used as described above. On contact with the water, the compressed particles rapidly expand. In the expanded state the discs have a thickness of around 15 mm. The diameter of the particles is not substantially changed, i.e. the expansion is uni-directional. Thus, the action of the liquid on the compressed sponge is to produce an expansion in the compressed sponge of around 500%. Water is able to pass through the expanded sponge substantially unhindered. As a result, the water quickly contacts and dissolves the creamer powder to produce the milk based beverage or beverage portion. The beverage containing the dissolved creamer powder passes through the filter material 12 and out of the beverage preparation machine.

Advantageously, the porous water-retaining nature of the spongiform particles helps to retain excess moisture that may be within the pod. The capillary action of the pores of the spongiform particles help to prevent dripping from the pad as it is transferred to a waste receptacle. In addition, the water-retaining nature of the spongiform particles has the consequence that the pad holding section of the beverage preparation machine contains less moisture and hence less contamination than compared with the use of prior art pads. As a result the machine is easier to clean and prepare in readiness for the next dispense cycle.

In another, non-illustrated, embodiment, the spongiform discs are replaced by particles of a hydrogel, starch or a combination thereof. The particles are in the form of spherical or otherwise shaped particles. In use, and on contact with water, the hydrogel or other absorbent material absorbs water and expands. The expansion of the hydrogel particles aids dissolution of the creamer powder. Advantageously, the intake of water by the hydrogel is rapid and results in the hydrogels absorbing preferentially water rather than dissolved creamer powder.

Utilising absorbent elements or particles as described above with the pod of Figures 3 and 4 has been shown to substantially eliminate creamer residue from the storage volume after use.

The pods of the present invention may also comprise one or more seals to allow for improved engagement of the pod with a pod holder of the beverage preparation machine. Seals may be provided on or adjacent an upper edge of the cup 29 or flange 30, on an outer surface of the sidewall of the cup, and on or adjacent a lower edge of the sidewall of the cup. The seals help to prevent water by-pass by reducing or eliminating the quantity of water that does not pass through the pod.

The pods of the present invention may also be provided with an aperture at or near the outlet through which the beverage is forced to form a jet of beverage. The jet of beverage can then be impacted against an impingement surface to create foaming of the beverage.

The pods may advantageously comprise grooves or channels on the upper surface of the partition 20 to aid inflow of water towards the inlet apertures 25. The grooves or channels are preferably linear and, in the case of a central inlet recess 24, radially inwardly directed towards the recess 24. The grooves or channels are preferably 1 to 2 mm in depth so as to prevent blockage when the pod is used together with a flexible pad in a one step dispense cycle.

Figures 6a to 6d illustrate alternative layouts for the lower surface of the pod. In Figure 6a, the lower surface is formed of the filter material 22 except for a central region which is non-transmissive to water. The central region may be in the form of the dispersion disc 21 described above and formed as part of the lower surface. In Figure 6b the filter material 22 forms the central region of the lower surface and the periphery 40 is non-transmissive. In Figure 6c the filter material 22 forms an annulus with central 21 and outer periphery 40 regions being non-transmissive. These arrangements can be used to channel flow of water and beverage through the pod. In Figure 6d the arrangement is as in Figure 6a except that the dispersion disc 21 comprises a plurality of apertures 70 at the boundary between the disc and the filter material 22 to allow through flow of water. In this version, the filter material 22 could be replaced with a non-transmissive material such that all water flow was through the apertures 70.

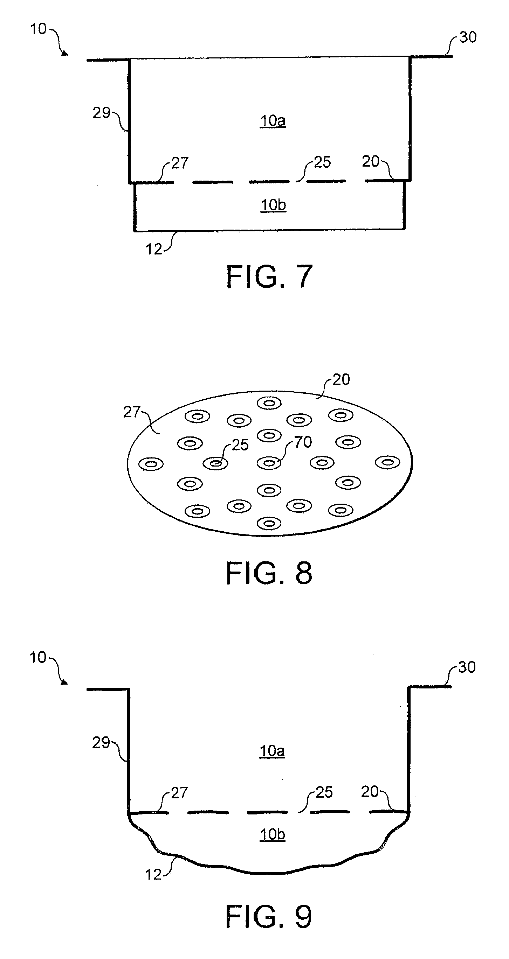

Figure 7 shows another embodiment of pod according to the present invention. In this embodiment the partition 20 of the pod 20 comprises a simple, integral partition with a plurality of apertures 25 therein. The apertures 25 are substantially flush with the partition so that the exit of the apertures does not extend downwardly into the lower compartment 10b. The partition 20 may be a perforated material which may be semi-rigid or rigid. Examples include plastics, metal, cardboard, etc.

The apertures 25 may be simple holes formed in the partition. However, the holes may optionally be flared upwards or downwards. The partition 20 may have smooth upper and lower faces or may have grooves, channels or passages formed in the upper and or lower faces to direct water flow to and from the apertures 25 in use.

Figure 9 illustrates a similar embodiment. However in this version the semi-rigid or rigid partition 20 is replaced by a flexible partition. A preferred material for the partition is a filtering material such as filter paper. As shown in Figure 8, localised reinforcing rings 70 may be bonded to the filter paper around each aperture 25 to improve the structural stability of the apertures 25 in use. Other reinforcing arrangements may be used such as wire meshes, apertured grids, etc. The reinforcing means may be attached or bonded to the filtering means or may simply lie in contact therewith in use. Again, the filter paper of the partition may have stamped therein grooves, channels or passages to direct water flow in use.

Also, as illustrated in Figure 9, the lower compartment 10d may be configured without a rigid or semi-rigid sidewall. Instead the filtering element 12 defines the sides and lower face of the lower compartment 10b.

The water soluble substance has been described as preferably being a milk- or dairy-based creamer powder. However the pods of the present invention may also find application with other soluble ingredients such as instant coffee, instant tea, chocolate, cappuccino, soup or dessert ingredients.

Whilst the pod has been particularly described with an inlet at the centre of the partition 20 other arrangements are within the scope of the present invention. In particular the inlet recess may be formed near the periphery of the partition 20. Further, the partition 20 may comprises more than one recess, each having apertures such that the inlet to the pod is distributed in at least two discrete regions of the partition. For example, three recesses of the form of recess 24 of Figure 3 may be provided.

In the above description, the storage chamber 31 has been described as a unitary volume. However, the volume may be separated into multiple compartments using rigid or flexible materials. The chambers may if desired contain different beverage ingredients or the same ingredients. Some or all of the compartments may comprise absorbent bodies of the types described above. Some or all of the compartments may have dispersion discs contained therein.

The pod may be re-useable and in this case may be provided with a removable partition 20 allowing access to the storage volume to allow replenishment of the creamer powder as for example shown in the embodiment of Figure 4.

The pod may be used for dispensing hot and cold beverages. Still and carbonated beverages may be produced by using still or carbonated water.

The absorbent particles may be formed from a hydrogel, starch or a mixture of one or more of spongiform, starch and hydrogel materials with a particle size of 25 microns to 10 mm.

The pod may be provided with an upper cover for sealing the cup 29 prior to use. The cover may be a push fit or preferably, a laminate or tear off element that seals around the upper edge of the cup 29 and/or to the upper surface of the flange 30. The cover serves to maintain the freshness of the storage volume 31 and in addition, where the pod is vended with one or more flexible pads in the upper compartment 10a the freshness of the flexible pads. In order to ready the pod for brewing the cover is simply removed, peeled or torn off. A push-fit lid or cover is preferred where the pod is intended to be re-useable. In addition, the pod may be provided with a further filtering material which seals around the upper edge of the cup 29 and/or to the upper surface of the flange 30.

## Claims

1. A pod for preparing a beverage comprising:
a lower compartment defining a storage volume containing a water-soluble composition or a combination or mixture of water-soluble compositions for forming a beverage;
the lower compartment comprising an upper surface containing one or more apertures forming an inlet of the lower compartment and a lower surface formed at least partially from filtering material, the filtering material forming an outlet of the pod;
the pod further comprising an open-topped upper compartment above the lower compartment which defines a chamber suitable for receiving one or more flexible pads containing one or more beverage ingredients;
wherein an outlet of the chamber of the upper compartment communicates with the inlet of the lower compartment,
wherein the apertures of the inlet of the lower compartment are arranged for showering and or jetting in use water into the lower compartment; and
wherein the water-soluble composition is agglomerated.

2. A pod as claimed in claim 1 wherein the agglomerated water-soluble composition is produced by contacting the water-soluble composition with steam, water, or aqueous solution or dispersion to effect agglomeration, and optionally, either simultaneously or subsequently drying the agglomerated composition.

3. A pod as claimed in any preceding claim wherein the water-soluble composition is a milk powder, creamer powder, or chocolate or cappuccino powder ingredient.

4. A pod as claimed in claim 3 wherein the milk powder or creamer powder is a dairy or non-dairy spray-dried coffee creamer or coffee whitener.

5. A pod as claimed in claim 4 wherein a fat component of the milk powder or creamer powder has a melting point of 10 to 40 degrees Celsius.

6. A pod as claimed in claim 4 or claim 5 wherein the creamer powder comprises one or more of vegetable fat, milk proteins, emulsifiers, stabilisers, foaming agents, milk fat, soy proteins, modified starches, carriers, fillers, sweeteners, flavours, colours, nutrients, preservatives and flow agents.

7. A pod as claimed in claim 3 wherein the chocolate powder ingredient comprises one or more of cocoa, chocolate, chocolate crumb, sucrose, milk powder, vegetable fat, milk proteins, whey proteins, emulsifiers, stabilisers, modified starches, carriers, fillers, sweeteners, flavours, colours, nutrients, preservatives and flow agents.

8. A pod as claimed in claim 3 wherein the cappuccino powder ingredient comprises one or more of instant coffee, lactose, milk powder, vegetable fat, milk proteins, whey proteins, emulsifiers, stabilisers, modified starches, carriers, fillers, sweeteners, flavours, colours, nutrients, preservatives, flow agents and foaming agents.

9. A pod as claimed in any preceding claim wherein the storage volume is a unitary volume.

10. A pod as claimed in any of claims 1 to 8 wherein the storage volume comprises a plurality of compartments.

11. A pod as claimed in claim 10 wherein the plurality of compartments comprises different beverage ingredients.

12. A beverage brewing kit comprising a pod, as claimed in any preceding claim, in combination with one or more loose beverage ingredients located in the chamber of the upper compartment and sealed therein by the filtering material, and/or the push-fit lid, or peelable or tearable laminate.

13. A beverage brewing kit as claimed in claim 13 wherein the loose beverage ingredients comprise roast and ground coffee.

14. A method of dispensing a beverage using a pod as claimed in any of claims 1 to 12 comprising the step of passing water downwardly through the pod such that beverage initially exits the pod through a lowermost surface thereof.
